# FASCICULE DE BREVET EUROPEEN

(11) **EP 3 986 775 B1**
(45) Date de publication et mention de la délivrance du brevet: **20.09.2023**
(21) Numéro de dépôt: 20739462.8
(22) Date de dépôt: 15.06.2020
(51) Int. Cl.: B62K 5/025, B62K 5/06, A61G 3/06, B62H 1/02, B62K 5/007, B62K 5/05, B62K 7/04, B62M 23/02, B62K 5/08

(54) **VÉHICULE À MOTEUR POUR PERSONNE À MOBILITÉ RÉDUITE, AVEC MONTÉE/DESCENTE FACILITÉE**
KRAFTFAHRZEUG MIT LEICHTEREM EINSTEIGEN/AUSSTEIGEN FÜR EINE PERSON MIT EINGESCHRÄNKTER BEWEGLICHKEIT
MOTOR VEHICLE FOR A PERSON WITH REDUCED MOBILITY, WHICH IS EASIER TO GET INTO/OUT OF

(30) Priorité: 18.06.2019 FR 1906559
(43) Date de publication de la demande: 27.04.2022
(73) Titulaire: Pommier, Eric, 78980 Saint-Illiers-le-Bois (FR); Trideau, Jean-Pierre, 28000 Chartres (FR); Raguideau, Christophe, 28600 Luisant (FR); Trideau, Corinne, 78550 Houdan (FR)
(72) Inventeur: POMMIER, Eric, 78980 Saint-Illiers-le-Bois (FR); TRIDEAU, Jean-Pierre, 28000 Chartres (FR); RAGUIDEAU, Christophe, 28600 Luisant (FR)
(74) Mandataire: Cabinet Chaillot
(86) Numéro de dépôt international: PCT/IB2020/055570
(87) Numéro de publication internationale: WO 2020/254938

(56) Documents cités:
- CN-A- 108 836 647
- CN-U- 202 105 112
- CN-U- 202 313 987
- FR-A1- 3 005 931
- US-A- 4 804 308
- US-A1- 2016 242 975

## Description

La présente invention se rapporte au domaine technique des véhicules pour personne à mobilité réduite et dont la capacité physique ne permet pas la conduite d'un véhicule traditionnel sans transformation de ce dernier, et porte en particulier sur un véhicule à moteur permettant une montée/descente extrêmement aisée et sûre.

On connaît de la demande de brevet français FR 3 005 931 un tricycle à moteur, proposé par les inventeurs de la présente invention, permettant à une telle personne de recouvrer une autonomie perdue tout en ayant un plaisir de conduite dans un véhicule dont le design est moderne.

De manière sommaire, le châssis de ce tricycle à moteur porte une plateforme sur laquelle peut se placer une personne en fauteuil roulant ou qui peut être équipée d'un fauteuil spécifique avec accoudoirs fixé sur le châssis, et deux roues directrices situées à l'avant et une roue motrice à l'arrière, alignée sur l'axe longitudinal du tricycle. Le tricycle dispose d'un accès latéral de chaque côté de la plateforme, par une porte latérale montée pivotante autour d'un axe horizontal au niveau de la plateforme. En position fermée, la porte latérale est relevée et ferme latéralement l'habitacle du tricycle, et en position ouverte, la porte latérale est abaissée et constitue une rampe inclinée dont le bord libre pourra reposer directement sur un trottoir.

Ce tricycle, de par l'accès latéral qu'il offre, présente, comme principaux avantages, de permettre au conducteur de se garer sur un emplacement de véhicule automobile et de descendre directement sur le trottoir, et non sur la chaussée avec les risques et désagréments que cela entraîne, ainsi que de permettre de ménager un espace derrière le poste de conduite en laissant une voire deux places, selon la puissance de motorisation, pour accueillir un ou deux passagers. Il permet donc de circuler sur des distances importantes avec un niveau de confort inégalé.

Le tricycle selon la demande de brevet français FR 3 005 931 constitue donc une solution en principe satisfaisante.

Toutefois, en pratique, la montée/descente peut dans certains cas être difficile, voire impossible, par exemple pour les personnes ne disposant pas de suffisamment de forces pour monter la rampe, ou lorsque la pente de la rampe est trop forte, par exemple en l'absence de trottoir. Pour tenter de palier à cet inconvénient, il a été prévu un système hydraulique pour abaisser temporairement l'ensemble du tricycle. Cependant, un tel abaissement, en plus de résulter en une compression des amortisseurs lorsque le tricycle est en position abaissée, ce qui n'est pas admissible à long terme pour les amortisseurs et les pneus des roues, empêche de fixer sous le châssis des éléments de motorisation, etc., et donc conduit à un agencement du tricycle plus complexe car très différent des tricycles à moteur non destinés aux personnes à mobilité réduite.

Il a été proposé de relier la rampe à une partie mobile d'une plateforme du véhicule. Par exemple, dans la demande US 2016/0242975 A1, la rampe est reliée à une partie mobile qui est apte à pivoter vers le bas et vers le haut. Dans le brevet US 4,804,308, qui divulgue un véhicule à moteur selon le préambule de la revendication 1, la rampe est reliée à une partie mobile de la plateforme qui est déplaçable verticalement entre des positions haute et basse, la rampe débutant son pivotement vers le bas lorsque la partie mobile a commencé à s'approcher de sa position basse et débutant son pivotement vers le haut au début de la montée de la partie mobile vers la position haute. Dans ces deux exemples, seule la partie mobile de la plateforme accueille la personne en fauteuil pendant le déplacement vertical entre les positions haute et basse, et la montée sur cette partie mobile et la descente à partir de cette dernière se fait encore par l'intermédiaire d'une rampe inclinée. Les problèmes présentés ci-dessus ne sont donc pas résolus.

Les présents inventeurs ont cherché à résoudre ces problèmes et à proposer un tricycle à moteur de structure simple et permettant une montée/descente aisée dans tous les cas de figure.

La solution selon la présente invention repose sur l'utilisation, pour la montée/ descente, d'une partie mobile verticalement faisant partie de la plateforme en position de conduite, partie mobile à laquelle est relié un abattant pouvant être placé dans une position horizontale dans laquelle il est déplaçable d'un seul tenant avec ladite partie mobile, comme cela sera expliqué plus en détail ci-après.

Les présents inventeurs se sont aperçus que cette solution n'est pas limitée aux tricycles à moteur, mais peut également être appliquée à tout véhicule à moteur, comme par exemple des voitures.

La présente invention définie à la revendication 1 a ainsi pour objet un véhicule à moteur, comprenant :
- un châssis,
- un ensemble roue avant directrice et un ensemble roue arrière,
- une plateforme pour accueillir au moins le conducteur du véhicule, au moins une partie de la plateforme étant solidaire du châssis, et
- au moins un abattant latéral situé sur un côté de la plateforme et relié à celle-ci de façon à être apte à pivoter entre une position dite relevée, dans laquelle l'abattant a été relevé et est globalement vertical, et une position dite abaissée, dans laquelle l'abattant a été pivoté vers le bas pour former un moyen d'accès par lequel une personne peut monter sur la plateforme et descendre de celle-ci, dans lequel la plateforme comprend une partie fixe solidaire du châssis et au moins une partie mobile latérale située au niveau d'un côté de la plateforme, la partie mobile étant déplaçable verticalement par rapport à la partie fixe de façon à être apte à être placée à une première position, dite position haute, dans laquelle elle est à fleur avec la partie fixe, et une deuxième position, dite position basse, dans laquelle elle se situe à une hauteur inférieure à celle de la partie fixe, étant prévus à cet effet des moyens de commande du déplacement vertical de l'au moins une partie mobile, le ou chaque abattant étant relié à la partie mobile respective de telle sorte que l'abattant et la partie mobile respective sont déplaçables verticalement d'un seul tenant entre les positions haute et basse alors que l'abattant est en position abaissée.

Ainsi, lorsqu'un abattant a été placé en position abaissée, l'abattant et la partie mobile respective à laquelle il est associé constituent une sous-plateforme mobile qui d'une part est de dimension suffisante pour qu'une personne en fauteuil puisse s'y placer et, d'autre part, est déplaçable verticalement tout en restant globalement horizontale. Autrement dit, l'abattant et la partie mobile respective sont déplaçables verticalement d'un seul tenant de la position haute à la position basse, et réciproquement, avec l'abattant en position abaissée sur toute la course de déplacement vertical de la partie mobile.

On comprend aisément que, lorsque la personne souhaite descendre du véhicule, il lui suffit de faire pivoter l'abattant jusqu'à la position abaissée, de se placer sur la sous-plateforme ainsi formée, puis de faire descendre la sous-plateforme jusqu'à la hauteur souhaitée, comme celle d'un trottoir ou directement sur la chaussée. Lorsque la personne souhaite monter sur le véhicule, il lui suffit de procéder aux mêmes opérations, à l'exception que cette fois-ci la sous-plateforme est montée jusqu'à la position haute, à partir de laquelle la personne peut relever l'abattant.

On peut donc constater que le moyen d'accès est globalement horizontal lors de la montée/descente, ce qui permet un accès aisé même aux personnes ne disposant pas de suffisamment de force pour monter une rampe, qui par définition est inclinée, comme dans l'état antérieur de la technique.

De plus, ce résultat est obtenu sans augmentation de la longueur de la porte latérale dans le cas où l'abattant constitue une porte latérale du véhicule, et l'on conserve donc un encombrement latéral réduit même lors de la montée/descente, ce qui est particulièrement important pour autoriser la montée/descente lorsque l'espace est limité sur les côtés du véhicule, comme par exemple sur les parkings de stationnement.

Enfin, selon la solution de la présente invention, les amortisseurs ne sont plus sollicités lors de la montée/descente et la hauteur du châssis n'est pas modifiée, ce qui permet de conserver un positionnement classique pour les éléments de motorisation, transmission, etc., rendant la conception de cet aspect du véhicule et sa fabrication bien plus simples.

Par conséquent, le véhicule selon la présente invention conserve les avantages procurés par celui de la demande de brevet français FR 3 005 931 tout en résolvant les problèmes qu'il posait.

On peut avantageusement prévoir, à un bord libre du ou de chaque abattant, une lèvre, de préférence rabattable, qui, en position abaissée de l'abattant, de préférence au moins à l'approche de la position basse de la partie mobile, est inclinée par rapport au reste de l'abattant de façon à faciliter la montée sur l'abattant et la descente de celui-ci en évitant que ledit bord libre de l'abattant, qui sinon formerait une petite marche, de l'épaisseur de l'abattant, ne constitue un obstacle aux roues du fauteuil.

On souligne ici que l'on entend par le terme « abattant » tout élément de type panneau ou plaque apte, dans la position abaissée, à former un moyen d'accès à la plateforme.

De préférence, le véhicule comprend en outre des moyens de stabilisation pour stabiliser le véhicule lors du déplacement de l'au moins une partie mobile entre les positions haute et basse. Ceci permet d'accroître encore davantage la sécurité de la personne à mobilité réduite.

On entend par « moyens de stabilisation » des moyens dédiés permettant de maintenir le véhicule immobile lors de la montée/descente, en plus des moyens classiques type frein à main qui servent à immobiliser le véhicule.

On peut mentionner comme exemple de moyens de stabilisation des vérins stabilisateurs agencés pour soulever le véhicule au-dessus du sol, bien connus par exemple pour les camping-cars et les camions grues. Le nombre de tels vérins stabilisateurs et leur position pourra être fonction notamment du poids et des dimensions du véhicule, et l'on pourrait par exemple prévoir, sous chaque côté de la plateforme, deux vérins stabilisateurs, l'un dans la région avant du véhicule et l'autre dans la région arrière.

De préférence, les moyens de stabilisation seront formés par l'au moins une béquille faisant partie des moyens de commande du déplacement vertical de l'au moins une partie mobile conformément à un mode de réalisation qui sera discuté ci-après.

De préférence, l'au moins une partie mobile fait partie, dans la position haute, de la région de la plateforme où se situe le poste de conduite du véhicule. Cela sera par exemple préféré lorsque le véhicule est un tricycle. Le véhicule peut donc être un tricycle, notamment un tricycle dont l'ensemble roue avant directrice comprend une unique roue avant et l'ensemble roue arrière comprend deux roues arrière ou un tricycle dont l'ensemble roue avant directrice comprend deux roues avant et l'ensemble roue arrière comprend une unique roue arrière ou deux roues arrière jumelées.

L'au moins une partie mobile peut également faire partie, dans la position haute, d'une région de la plateforme destinée à accueillir un passager du véhicule, le véhicule comprenant deux roues avant et au moins deux roues arrière.

De préférence, le véhicule comprend deux abattants, situés de part et d'autre de la plateforme, et deux parties mobiles. Ainsi, il est possible de monter/descendre du véhicule des deux côtés de ce dernier, en fonction du besoin.

L'au moins un abattant peut constituer, en position relevée, une porte latérale du véhicule.

En variante, le véhicule peut comprendre en outre au moins deux portes latérales, situées de part et d'autre de la plateforme et aptes à être ouvertes et fermées, le ou chaque abattant s'étendant, en position relevée, en regard d'une porte latérale respective, côté intérieur du véhicule, le ou chaque abattant étant apte à être déplacé à la position abaissée après ouverture de la porte latérale respective. La solution selon la présente invention est donc bien applicable aux véhicules classiques, dont seule la conception des châssis doit être modifiée pour l'intégration de l'au moins une partie mobile de la plateforme.

Le véhicule peut comprendre en outre, pour le ou chaque abattant, un actionneur non manuel apte à déplacer l'abattant respectif entre la position relevée et la position abaissée. Cet actionneur pourra prendre toute forme appropriée, comme par exemple des vérins électriques, hydrauliques, etc.

En variante, le ou chaque abattant peut être relié librement pivotant à la partie mobile respective de la plateforme, étant en outre prévus, pour le ou chaque abattant, des moyens manuels de relevage de l'abattant de la position abaissée à la position relevée, ainsi que des moyens de butée pour l'abattant dans la position abaissée et des moyens de blocage de l'abattant dans la position relevée.

Les moyens de relevage peuvent comprendre, pour le ou chaque abattant, une main-courante horizontale montée pivotante autour d'un axe vertical situé en avant ou en arrière de la partie mobile respective de la plateforme, la main-courante étant en outre reliée à un bord de l'abattant par une courroie ou une sangle. De tels moyens de relevage sont particulièrement fiables et simples à mettre en oeuvre, la main-courante pouvant également être utilisée par la personne pour se déplacer sur l'abattant/partie mobile lors de la montée/descente.

De préférence, le châssis est configuré de telle sorte que l'au moins une partie mobile est, dans la position haute, inscrite dans le châssis et protégée par celui-ci.

En d'autres termes, pour la ou chaque partie mobile, des éléments de structure du châssis définissent des côtés d'une ouverture formant un espace dans lequel la partie mobile se place dans la position haute, ces éléments de structure protégeant ainsi ladite partie mobile.

Notamment dans le cas où le véhicule est un tricycle, le châssis peut comprendre une partie centrale et, de chaque côté de cette dernière, une extension latérale avant et une extension latérale arrière, le châssis ayant ainsi une forme de H, un espace étant formé entre les extensions latérales avant et arrière situées d'un même côté de la partie centrale, espace dans lequel se place une partie mobile respective de la plateforme lorsqu'elle est en position haute.

Avec cette configuration du châssis, les parties mobiles de la plateforme forment une région de la surface de la plateforme sur laquelle la personne se tient lorsqu'elle est en position de conduite, ce qui permet de ne pas augmenter les dimensions latérales du véhicule, et les parties mobiles se trouvent en outre inscrites dans le châssis et protégées par celui-ci lorsque le véhicule circule.

On pourra prévoir, pour la ou chaque partie mobile, des moyens de verrouillage de la partie mobile en position haute, comme par exemple des moyens à doigts de verrouillage qui, dans une position dite de verrouillage, s'opposent à un déplacement de la partie mobile et dans une position dite de libération, ne s'opposent plus à un tel déplacement.

De préférence, les moyens de commande du déplacement vertical de l'au moins une partie mobile sont aptes à assurer un déplacement vertical continu de l'au moins une partie mobile et à arrêter ce déplacement vertical à une quelconque hauteur inférieure à celle de la partie mobile dans la position haute. De cette manière, l'utilisateur peut définir la position basse de la partie mobile en fonction du besoin, comme par exemple en fonction de la hauteur du trottoir ou pour aller directement sur la chaussée.

Les moyens de commande du déplacement vertical de l'au moins une partie mobile peuvent être manuels. On pourrait ainsi prévoir un système à manivelle manuelle qui serait tournée par l'utilisateur et qui ferait monter/descendre la partie mobile, par exemple via un système de roue et vis sans fin, avec interposition d'un démultiplicateur de force.

De préférence, les moyens de commande du déplacement vertical de l'au moins une partie mobile comprennent, pour la ou chaque partie mobile, au moins un actionneur non manuel.

Dans un exemple de réalisation, le ou chaque actionneur est un actionneur linéaire, notamment un vérin, dont une première partie, dite fixe, est rendue solidaire du châssis et dont une seconde partie, dite mobile, est reliée à la partie mobile respective de la plateforme. Le véhicule pourra avantageusement comprendre, à chaque côté de la partie fixe de la plateforme où se situe une partie mobile, au moins une structure tubulaire solidaire du châssis et comprenant un montant portant un support auquel est reliée la partie fixe d'un actionneur linéaire respectif. On pourra prévoir un seul actionneur pour chaque partie mobile. Dans ce cas, il sera avantageux de prévoir sur le côté opposé à celui où se situe l'actionneur, un guidage en translation, comme par exemple une glissière à billes, pour s'assurer que la partie mobile et l'abattant restent globalement horizontaux pendant la montée/descente. De préférence, sont prévus, à chaque côté de la partie fixe de la plateforme où se situe une partie mobile, une structure tubulaire avant et une structure tubulaire arrière à chacune desquelles est reliée la partie fixe d'un actionneur linéaire, de telle sorte que le déplacement de chaque partie mobile de la plateforme est commandé par deux actionneurs linéaires. Le ou les actionneurs linéaires peuvent par exemple être des vérins hydrauliques, électriques, etc., ou bien consister en un mécanisme à pignon-crémaillère dont la crémaillère est solidaire de la partie mobile et s'étend vers le haut à partir de celle-ci. Dans le cas de tels actionneurs linéaires, les moyens de stabilisation du véhicule pourront être des vérins stabilisateurs, comme mentionné ci-dessus.

Toutefois, selon un mode de réalisation préféré, les moyens de commande du déplacement vertical de l'au moins une partie mobile comprennent, pour la ou chaque partie mobile :
- un actionneur formé par une béquille repliable sous ladite partie mobile et dépliable vers le bas à partir de celle-ci, la béquille étant motorisée par des moyens de motorisation, la béquille constituant lesdits moyens de stabilisation ; et
- des moyens de guidage en translation de ladite partie mobile par rapport au châssis.

Lorsque la béquille est en contact avec le sol, son repliement permet de faire descendre la partie mobile tandis que son dépliement permet de la faire monter. Les moyens de motorisation assureront, de préférence, un mouvement continu de la béquille, dans les deux sens, de façon à permettre d'arrêter la partie mobile à une quelconque hauteur, comme mentionné ci-dessus.

En plus de la fonction de montée/descente de la partie mobile/abattant, la béquille assure une fonction de stabilisation de l'ensemble du véhicule tout au long de la montée/descente, ce qui est particulièrement important du point de vue sécurité de la personne à mobilité réduite.

De préférence, la béquille comprend un bras principal et un bras secondaire, le bras principal ayant une première extrémité articulée à une pièce située à l'intérieur d'un longeron creux appartenant à la partie mobile, et une seconde extrémité apte à venir en appui sur le sol après dépliement de la béquille, le bras secondaire étant repliable à l'intérieur du bras principal et ayant une première extrémité articulée à ce dernier et une seconde extrémité articulée à un palier fixe dans ledit longeron, et les moyens de motorisation comprennent ladite pièce et des moyens d'entraînement en translation de ladite pièce dans les deux directions de translation.

On comprend aisément qu'étant donné que l'extrémité du bras secondaire qui est articulée au palier est fixe en translation, un déplacement en translation de ladite pièce, et donc de l'extrémité du bras principal qui est y est articulée, pour s'éloigner dudit palier amène le bras principal et le bras secondaire à se replier vers ledit longeron, tandis qu'un déplacement pour se rapprocher dudit palier amène le bras principal et le bras secondaire à se déplier.

De préférence, la pièce est une douille et les moyens d'entraînement en translation de ladite pièce comprennent un arbre enfilé à travers ladite douille et qui s'étend le long de l'intérieur dudit longeron, et des moyens d'entraînement en rotation de l'arbre aptes à faire tourner l'arbre dans les deux sens de rotation, la douille et l'arbre étant reliés par une liaison hélicoïdale de telle sorte qu'une rotation de l'arbre amène une translation de la douille. Par exemple, l'arbre pourra être un arbre cannelé à billes et la douille être une douille à billes, les moyens d'entraînement en translation étant alors mis en oeuvre sous la forme d'une vis à billes, ou bien l'arbre pourra être fileté extérieurement et la douille être filetée intérieurement, les moyens d'entraînement en translation étant alors mis en oeuvre sous la forme d'un système vis-écrou.

La seconde extrémité du bras principal peut être munie d'une roulette. Ainsi, lorsque la partie mobile est en position basse, à savoir lors de la montée ou de la descente d'une personne, il est possible de faire rouler le véhicule sur une petite distance afin de ne pas le laisser dans une position dangereuse par exemple. Conjointement avec cette capacité à se déplacer, cette roulette permet d'obtenir un léger désaxage en hauteur entre d'une part le point de contact avec le sol et, d'autre part, les axes d'articulation des bras principal et secondaire à l'intérieur dudit longeron creux, ce qui permet de réduire la puissance que doivent fournir les moyens de motorisation au début de la montée, et donc de soulager ces derniers.

Dans une variante préférée, la seconde extrémité du bras principal est munie d'une platine articulée, de préférence articulée autour d'un premier axe de pivotement qui est horizontal et parallèle à l'axe longitudinal du bras principal, et d'un second axe de pivotement qui est horizontal et perpendiculaire au premier axe de pivotement, l'un des premier et second axes de pivotement étant situé au-dessus de l'autre. Une telle articulation, et notamment avec la configuration préférée indiquée ci-dessus, permet à la platine d'être plaquée correctement sur un sol incliné pour une bonne stabilisation par la béquille. De plus, l'utilisation d'une telle platine permet d'offrir une plus grande surface de contact avec le sol, par comparaison à l'utilisation d'une simple roulette, et ainsi d'éviter que la béquille ne s'enfonce dans le sol, par exemple en cas de sol boueux. La platine permet donc à la béquille d'assurer sa fonction de stabilisation dans tous les cas de figure.

De préférence, les moyens de guidage en translation consistent, pour la ou chaque partie mobile, en deux liaisons glissières, chacune au niveau d'un bord latéral de ladite partie mobile et chacune comprenant une partie de guidage fixe solidaire du châssis et une partie de guidage coulissante solidaire de ladite partie mobile.

Dans le cas où le véhicule est un tricycle, il pourra avantageusement comprendre, de chaque côté de la partie centrale de la plateforme, au moins une structure tubulaire solidaire du châssis et comprenant un montant auquel, le cas échéant, est fixée la partie de guidage fixe d'une liaison glissière. La ou les structures tubulaires pourront également servir de support pour des accessoires, comme par exemple des catadioptres, des lampes, des pinces d'immobilisation du fauteuil roulant, à l'avant et à l'arrière, etc.

Dans le cas où le véhicule est un tricycle, il pourra avantageusement comprendre, derrière le poste de conduite du véhicule, à l'arrière de la plateforme, un support de siège qui est rabattable et/ou amovible de façon à pouvoir être placé dans une première position, dite d'utilisation, dans laquelle il supporte une assise simple ou double, ou une seconde position dans laquelle il a été rabattu ou, le cas échéant, enlevé, pour dégager la région de la plateforme située derrière le poste de conduite, afin de permettre à une personne en fauteuil roulant de se placer derrière ledit poste de conduite. On pourra également avantageusement prévoir un siège avant amovible et/ou repliable, dans le poste de conduite, pour une utilisation lorsque le fauteuil roulant se trouve derrière le poste de conduite.

Les caractéristiques de la présente invention décrites ci-dessus ne sont pas limitées au type spécifique de motorisation utilisée pour le véhicule. Toutefois, on comprendra aisément qu'il est important que cette motorisation permette un déplacement en marche arrière. En effet, le véhicule selon la présente invention permettant à une personne à mobilité réduite de monter et descendre du véhicule de manière très aisée, notamment sur un trottoir, pour bénéficier pleinement des avantages procurés par la présente invention le conducteur doit pouvoir être en mesure de réaliser des manoeuvres telles qu'une manoeuvre de créneau, en épi, etc., qui nécessitent un déplacement en marche arrière.

Dans le cadre de l'intégration de cette marche arrière à un véhicule selon la présente invention qui serait un tricycle, les présents inventeurs ont mis au point un système de marche arrière innovant pouvant être utilisé dans le cas où l'ensemble roue arrière du véhicule est une unique roue arrière ou deux roues arrière jumelées.

Ainsi, de préférence, le véhicule selon la présente invention comprend un système de marche arrière apte à entraîner en rotation de marche arrière l'arbre de roue de l'ensemble roue arrière, le système de marche arrière comprenant :
- un moyen moteur dédié, comprenant un arbre moteur destiné, en utilisation, à tourner dans un sens de rotation conduisant à un déplacement du véhicule en marche arrière parallèle à l'arbre de roue ;
- un moyen d'accouplement sélectif commandable de façon à accoupler ou désaccoupler l'arbre moteur et l'arbre de roue ; et
- des moyens de commande du moyen d'accouplement sélectif.

De préférence, le moyen d'accouplement sélectif est un embrayage, dit de marche arrière, dont une première partie est solidaire en rotation, directement ou indirectement, de l'arbre moteur et dont une seconde partie est solidaire en rotation, directement ou indirectement, de l'arbre de roue.

De préférence, le moyen moteur dédié est un moteur électrique à renvoi d'angle, ce qui permet de disposer le moyen moteur pour que sa direction longitudinale soit parallèle à celle du véhicule, de cette manière le système de marche arrière est compact et s'inscrit aisément derrière la carrosserie du véhicule, sans dépasser latéralement de cette dernière.

Les moyens de commande du moyen d'accouplement sélectif, notamment de l'embrayage de marche arrière, peuvent être formés par tout moyen approprié, qui sont bien connus en soi, et ces moyens peuvent être, par exemple, mécanique, hydraulique ou électrique.

L'embrayage de marche arrière peut être avantageusement un embrayage électromagnétique, par exemple à denture.

L'embrayage de marche arrière pourrait être interposé directement entre l'arbre moteur et l'arbre de roue, sans interposition d'éléments complémentaires tels qu'une transmission.

Toutefois, dans un mode de réalisation préféré, le véhicule comprend un système de marche avant qui comprend un moyen moteur pour la marche avant, disposé en avant de l'ensemble roue arrière et ayant un arbre moteur relié par courroie à une transmission qui comprend un arbre de transmission entraîné en rotation par la courroie et entraînant en rotation de marche avant l'arbre de roue, l'arbre de transmission se prolongeant vers l'extérieur de telle sorte qu'une région d'extrémité de celui se situe au-delà de ladite courroie, le moyen d'accouplement sélectif, le cas échéant la seconde partie de l'embrayage de marche arrière, étant relié à ladite région d'extrémité de l'arbre de transmission.

Les présents inventeurs se sont aperçus que le système de marche arrière tel que défini ci-dessus n'est pas limité à une utilisation sur un véhicule selon la présente invention, à savoir incorporant une partie mobile et un abattant pour la montée/ descente d'une personne à mobilité réduite, mais qu'il pourrait également être utilisé pour des véhicules classiques à deux ou trois roues de type scooter.

En effet, traditionnellement les véhicules à deux ou trois roues de type scooter ne sont pas équipés de système de marche arrière et c'est à l'utilisateur, par sa seule force, de faire reculer le véhicule tout en le contrôlant, ce qui en pratique se révèle être au mieux délicat pour les personnes de bonne stature, mais très difficile pour la plupart des personnes. Dans tous les cas de figure, déplacer le véhicule vers l'arrière est fastidieux.

Le système de marche arrière permet de résoudre ce problème, l'utilisateur ayant uniquement à diriger le véhicule, et non plus à également le déplacer par sa force.

Est ainsi divulgué par la présente un système de marche arrière pour un véhicule à moteur de type scooter ayant un seul ensemble roue arrière, qui pourra consister par exemple en une unique roue arrière ou en deux roues arrière jumelées, le système de marche arrière étant apte à entraîner en rotation de marche arrière l'arbre de roue de l'ensemble roue arrière, le système de marche arrière étant caractérisé par le fait qu'il comprend :
- un moyen moteur dédié, comprenant un arbre moteur ;
- un moyen d'accouplement sélectif commandable de façon à accoupler ou désaccoupler l'arbre moteur et l'arbre de roue ; et
- des moyens de commande du moyen d'accouplement sélectif.

Les caractéristiques facultatives du système de marche arrière décrites en liaison avec le véhicule selon la présente invention sont également des caractéristiques facultatives du système de marche arrière tel que défini au paragraphe précédent.

On entend par « moyen moteur dédié » que le moyen moteur assurant la marche arrière est distinct de celui assurant le déplacement en marche avant.

Pour mieux illustrer l'objet de la présente invention, on va en décrire ci-après des modes de réalisation particuliers, avec référence aux dessins annexés.

### Sur ces dessins :

[Fig.1] : vue en perspective d'un véhicule à moteur selon un mode de réalisation particulier de la présente invention, ici un tricycle, dans la configuration abattant en position abaissée, partie mobile en position haute et béquille dépliée sur la droite de la vue, et en position de conduite sur la gauche de la vue ;
[Fig.2] : vue en perspective de dessus du châssis du véhicule de la Figure 1, avec présence d'un abattant ;
[Fig.3] : vue en perspective de dessous du châssis de la Figure 2 ;
[Fig.4] : vue de détail, depuis le dessous, de la béquille dans la position dépliée ;
[Fig.5] : vue de détail de la liaison entre un abattant et la partie mobile respective, avec l'abattant en position relevée ;
[Fig.6] : vue de détail analogue à la Figure 5, avec l'abattant en position abaissée ;
[Fig.7] : vue de détail de l'abattant en position relevée, montrant les moyens de blocage de ce dernier dans la position relevée ;
[Fig.8] : vue en perspective du véhicule en configuration de conduite, à savoir avec abattant en position relevée, partie mobile en position haute et béquille en position repliée ;
[Fig.9] : vue en perspective du véhicule en configuration abattant en position abaissée, partie mobile en position haute et béquille dépliée ;
[Fig.10] : vue en perspective du véhicule en configuration abattant en position abaissée, partie mobile en position basse et béquille entièrement repliée ;
[Fig.11] : vue schématique de dessus d'un véhicule de type tricycle, deux roues avant directrices et une roue arrière, et simple siège derrière le poste de conduite ;
[Fig.12] : vue analogue à la Figure 11, mais avec deux sièges à l'arrière ;
[Fig.13] : vue analogue à la Figure 11, mais avec siège à l'avant et fauteuil roulant à l'arrière ;
[Fig.14] : vue analogue à la Figure 11, mais pour un véhicule de type tricycle avec une roue avant directrice et deux roues arrière ;
[Fig.15] : vue analogue à la Figure 14, mais avec deux sièges à l'arrière ;
[Fig.16] : vue analogue à la Figure 14, mais avec siège à l'avant et fauteuil roulant à l'arrière ;
[Fig.17] : vue schématique de dessus d'un véhicule à quatre roues, avec partie mobile faisant partie de la région du poste de conduite ;
[Fig.18] : vue analogue à la Figure 17, mais avec partie mobile faisant partie d'une région passager ;
[Fig.19] : vue de côté de la roue arrière et du système de marche arrière du véhicule ; et
[Fig.20] : vue en coupe longitudinale partielle du système de marche arrière de la Figure 19.

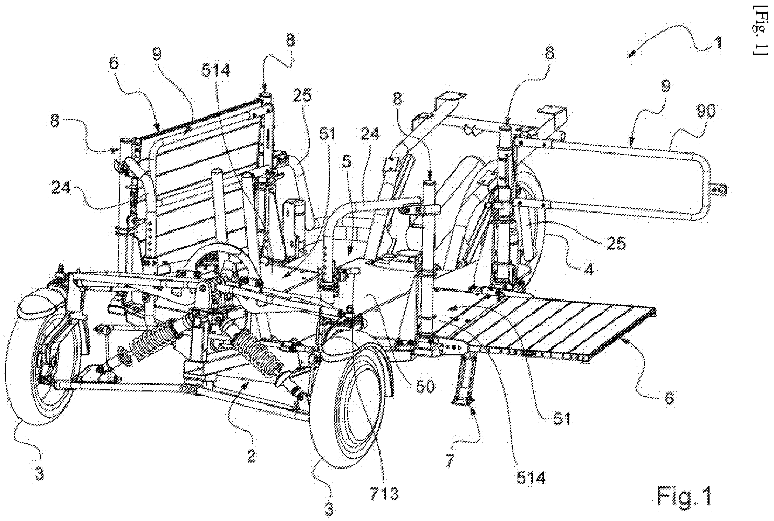

Si l'on se réfère tout d'abord à la Figure 1, on peut y voir que l'on y a représenté en vue en perspective un tricycle à moteur 1 selon un mode de réalisation particulier de la présente invention, illustré sans carrosserie.

Le tricycle à moteur 1 comprend, de manière similaire au tricycle à moteur de la demande française FR 3 005 931, un châssis 2, deux roues avant 3 directrices, une roue arrière 4, une plateforme 5 permettant d'accueillir le conducteur et, si on le souhaite, un ou deux passagers derrière le conducteur, et deux portes latérales 6.

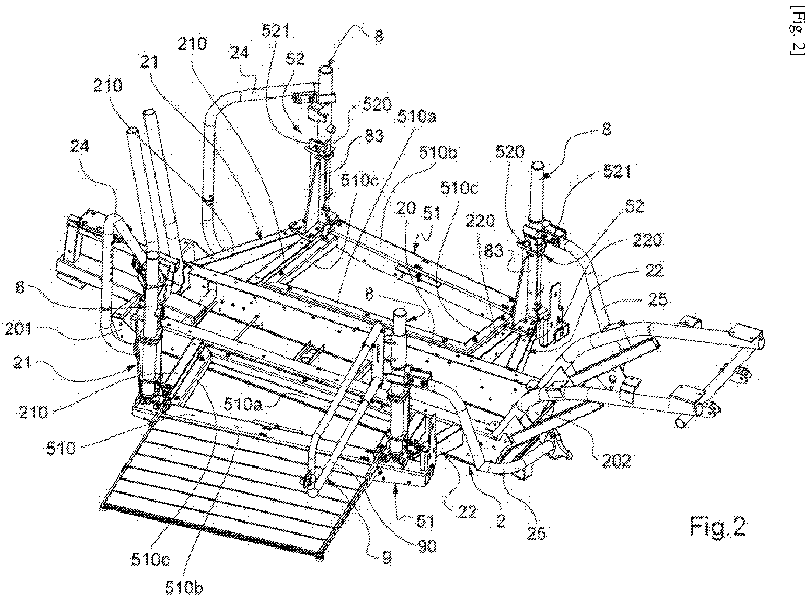

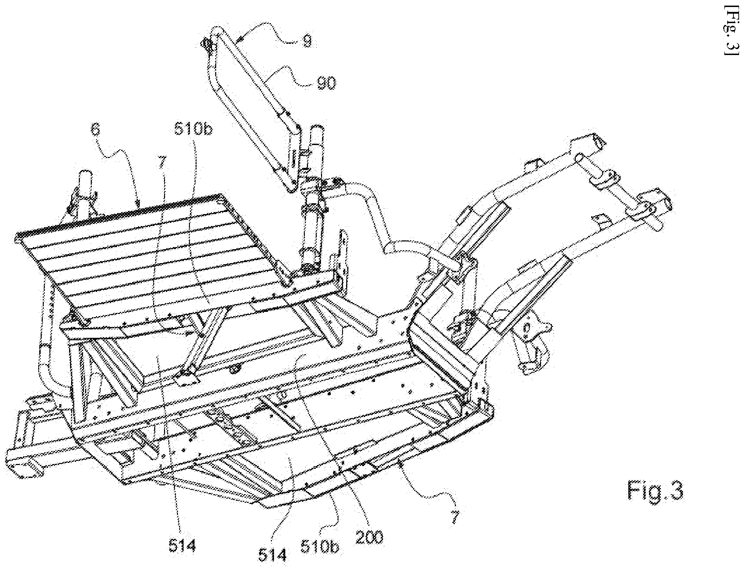

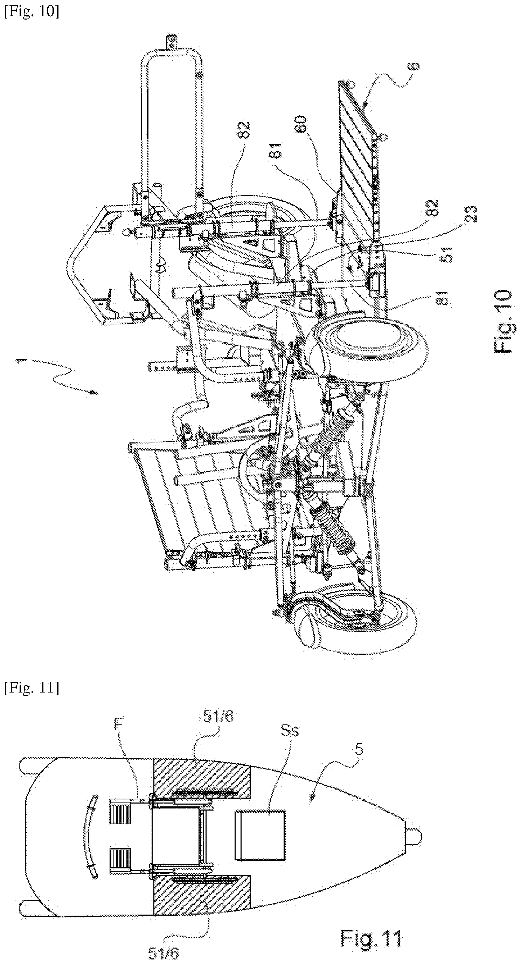

Si l'on se réfère maintenant à la Figure 2, on peut voir que le châssis 2 a globalement la forme d'un H, et il comprend ainsi une partie centrale 20 et, de chaque côté de celle-ci, une extension latérale avant 21 et une extension latérale arrière 22 à distance l'une de l'autre. La partie centrale 20 se présente globalement sous la forme d'un cadre rectangulaire comprenant deux longerons 200 (Figure 3) dont les extrémités sont reliées à l'avant par une traverse 201 et à l'arrière par une traverse 202. Chaque extension latérale 21 et 22 est formée par deux poutres, respectivement 210 et 220, qui s'étendent vers l'extérieur à partir d'un longeron 200 respectif, en se rapprochant l'une de l'autre à mesure qu'elles s'éloignent du longeron 200, de sorte que les extrémités libres des poutres 210, 220 sont proches l'une de l'autre. De chaque côté de la partie centrale 20 est ainsi formé un espace 23 (Figure 10) délimité par le longeron 200 et deux poutres 210, 220.

Si l'on se réfère à la Figure 1, on peut voir que la plateforme 5 est portée par le châssis 2 et comprend en particulier une partie fixe 50, centrale, et deux parties latérales 51, mobiles verticalement.

La partie fixe 50 correspond à la partie centrale 20 et aux extensions latérales 21, 22 du châssis 2, sur lesquelles ont été appliquées des plaques de fermeture des ouvertures que présente le châssis 2.

Si l'on réfère également à la Figure 2, on peut voir que chaque partie mobile 51 comprend un cadre 510 rigide en travers duquel s'étend une plaque de fermeture 514 (Figure 1).

Le cadre 510 est dimensionné de telle sorte qu'au moins une partie du cadre 510 s'étend dans l'espace 23 lorsque la partie mobile 51 est en position haute.

Le cadre 510 est ici formé par un longeron intérieur 510a, un longeron extérieur 510b et deux traverses 510c les reliant à leurs extrémités. En position haute, le longeron intérieur 510a se situe au voisinage du longeron 200 du châssis 2 tandis que chaque traverse 510c se situe au voisinage d'une poutre 210, 220 respective. Le longeron intérieur 510a a ainsi une longueur au moins légèrement inférieure à la longueur de l'espace 23. Le longeron extérieur 510b a quant à lui une longueur supérieure à celle de l'espace 23, et à cet effet les traverses 510c s'étendent au-delà des poutres 210, 220, de sorte que le longeron extérieur 510b se situe à l'extérieur de l'espace 23. En particulier, chaque extrémité du longeron extérieur 510b se situe, lorsque la partie mobile 51 est en position haute, en regard des extrémités libres des poutres 210, 220 formant l'une des extensions latérales 21, 22.

Si l'on se réfère en outre à la Figure 3, on peut voir que le longeron extérieur 510b a un profil de section transversale qui est globalement en U, avec son ouverture dirigée vers le bas, pour recevoir des moyens 7 de commande du déplacement de la partie mobile 51 entre les positions haute et basse, et que l'on va maintenant décrire plus en détail.

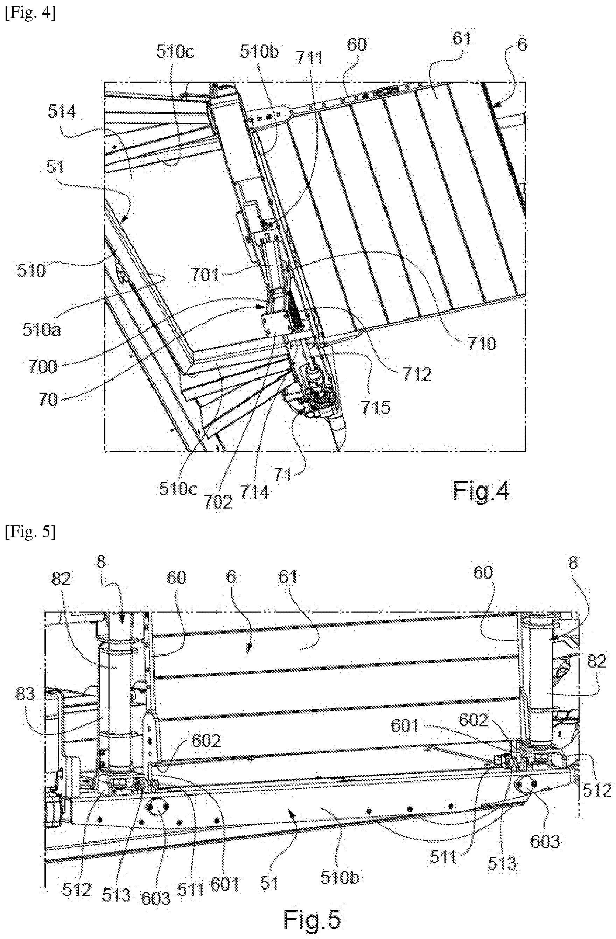

Comme on peut mieux le voir sur la Figure 4, les moyens 7 consistent ici, d'une manière générale, en une béquille 70 repliable dans le longeron extérieur 510b et en des moyens de motorisation 71 du dépliement/repliement de la béquille 70.

La béquille 70 comprend un bras principal 700 et un bras secondaire 701. Une extrémité du bras principal 700 est destinée à venir en appui sur le sol, et est munie d'une platine 702, tandis que l'autre extrémité s'achève en une chape qui se situe à l'intérieur du longeron extérieur 510b et en travers de laquelle est monté, de manière articulée, une pièce 710. Le bras secondaire 701 a une extrémité articulée au bras principal 700, globalement à mi-longueur de ce dernier, et a son autre extrémité articulée à un palier 711 fixé à l'intérieur du longeron extérieur 510b. Le bras principal 700 a un profil en U et le bras secondaire 701 est dimensionné pour pouvoir être reçu dans le bras principal 700 lorsque la béquille 70 est en position repliée.

Les moyens de motorisation 71 sont basés sur un entraînement de type liaison hélicoïdale, ici mise en oeuvre par une vis à billes comprenant un arbre cannelé 712 à billes, enfilé à travers la pièce 710 qui est ici une douille, et un moyen d'entraînement en rotation de l'arbre cannelé 712.

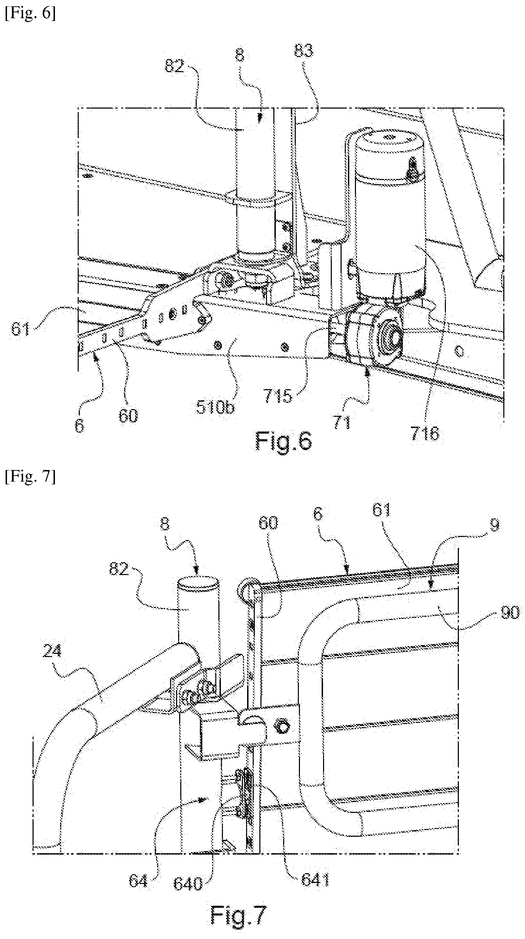

L'arbre cannelé 712 s'étend à l'intérieur du longeron extérieur 510b et est supportée, à une première extrémité, par le palier 711, et à une seconde extrémité par un palier 714 monté fixe dans le longeron extérieur 510b, au niveau duquel l'arbre cannelé 712 est accouplé à un arbre de transmission 715 s'étendant lui-aussi le long du longeron extérieur 510b et faisant saillie hors de l'extrémité arrière de ce dernier, au niveau d'une extrémité par laquelle il est accouplé à un moteur 716 (Figure 6), comme par exemple un moteur électrique, configuré pour pouvoir faire tourner l'arbre de transmission 715, et donc l'arbre cannelé 712, dans les deux sens de rotation. Le moteur 716 est commandable à distance.

Grâce à la liaison hélicoïdale entre la béquille 70 et l'arbre cannelé 712, une rotation de ce dernier dans un premier sens de rotation se traduira par un déplacement en translation de la douille 710 dans la direction l'éloignant du palier 711, et donc en un repliement de la béquille 70 vers l'intérieur du longeron extérieur 510b, tandis qu'une rotation de l'arbre cannelé 712 dans un second sens de rotation, opposé au premier, se traduira par un rapprochement de la douille 710 vers le palier 711, et donc en un dépliement de la béquille 70.

Comme cela sera décrit ci-après, le repliement et le dépliement de la béquille 70 permettent, en fonction de la position de la partie mobile 51, de déplacer verticalement cette dernière entre une position haute, dans laquelle la partie mobile 51 est au niveau de la partie fixe 50 de la plateforme 5, et une position basse, dans laquelle la partie mobile 51 est à une hauteur inférieure à celle de la partie fixe 50.

Des moyens de blocage en position de chaque partie mobile 51 sont en outre prévus pour immobiliser la partie mobile 51 dans l'une quelconque des positions basse et haute et dans une quelconque position entre celles-ci. Ces moyens de blocage peuvent notamment être intégrés dans le moteur 716, et consister, par exemple, en un frein à manque de courant dans le cas d'un moteur 716 électrique : en l'absence de commande de ces derniers, donc dans les cas où l'on ne souhaite pas déplacer la partie mobile 51, le frein empêche automatiquement la partie mobile 51 de se déplacer, et ce sans consommer d'énergie.

Le mouvement de chaque partie mobile 51 par rapport au châssis 2 est guidé par des moyens de guidage en translation 8, qui globalement consistent ici en deux liaisons glissières entre la partie mobile 51 et le châssis 2.

Dans le mode de réalisation représenté, comme on peut le voir sur les Figures 5 et 10, chaque liaison glissière, une au niveau de chaque extrémité du longeron extérieur 510b, comprend une tige 81 qui est solidaire du longeron extérieur 510b et qui s'étend verticalement, vers le haut, à partir de ce dernier, et au moins un palier lisse, ici deux paliers lisses, monté dans un tube 82 cylindrique s'étendant verticalement, vers le haut, à partir des extrémités libres des poutres 210, 220 formant une extension latérale 21, 22, auxquelles il est fixé par une équerre 83 dont l'aile horizontale est fixée sur lesdites poutres 210, 220, et dont l'aile verticale est fixée sur le tube 82. Chaque tige 81 est fixée, au niveau de son extrémité inférieure, par tout moyen approprié, à l'une des extrémités libres du longeron extérieur 510b, qui comme indiqué ci-dessus se situe en regard des extrémités libres des poutres 210, 220, et s'étend de manière coulissante dans le tube 82, en passant à travers le ou les paliers lisses.

La partie latérale 51 est ainsi guidée en translation verticale au niveau de chacune des deux extrémités libres du longeron extérieur 510b.

On souligne ici que chaque tube 82 est également fixé au châssis 2 au niveau de l'extrémité supérieure du tube 82, en particulier fixé le cas échéant à une structure tubulaire avant 24 ou une structure tubulaire arrière 25 solidaire du châssis 2 et prévue respectivement en avant des extensions latérales avant 21 ou en arrière des extensions latérales arrière 22 (Figures 1 et 2).

Les structures tubulaires 24, 25 peuvent faire office de garde-corps et servir de support à la fixation d'accessoires, par exemple d'accessoires de sécurité tels que des catadioptres, des lampes de sécurité, etc., ou, comme représenté, des bras portant des pinces 713 destinées à venir se serrer sur des tubes du châssis du fauteuil roulant de façon à immobiliser ce dernier sur la plateforme.

Par ailleurs, sont également prévus des moyens 52 de sécurité, pour le verrouillage automatique de la partie mobile 51 à son arrivée en position haute ainsi que pour son déverrouillage manuel. Comme on peut le voir sur la Figure 2 par exemple, ces moyens de sécurité 52 peuvent comprendre, pour chaque partie mobile 51, deux poignées 520 portées chacune par un support 521 solidaire d'un tube 82, chaque poignée 520 ayant un doigt de verrouillage qui, dans une position dite de verrouillage, s'étend à travers un trou correspondant dans ledit tube 82 et dont l'extrémité libre est reçue, en position de verrouillage, dans un renfoncement ménagé à cet effet dans la tige 81 respective. Les poignées 520 sont sollicitées par ressort en direction de la position de verrouillage. Lorsque l'on souhaite déplacer la partie mobile 51 vers le bas, on dépliera tout d'abord la béquille 70 jusqu'au sol, puis l'on tire sur les deux poignées 520 pour désengager les doigts de verrouillage vis-à-vis de la tige 81 et du tube 82, de façon à autoriser le coulissement de la tige 81 dans le tube 82, puis de tourner les poignées 520, par exemple d'au moins un quart de tour, dans une position où les doigts de verrouillage sont maintenus désengagés. Avant la remontée, on fera tourner chaque poignée 520 dans le sens contraire, par exemple d'au moins un quart de tour, de telle sorte que le doigt de verrouillage s'étend à travers le tube 82 correspondant et s'engagera automatiquement dans le renfoncement de la tige 81 à son arrivée en position haute.

On va maintenant décrire la manière dont les abattants 6 sont reliés aux parties mobiles 51 avec référence aux Figures 5 et 6.

Tout d'abord, chaque abattant 6 est ici formé par deux barres 60 en travers desquelles est placé un moyen de fermeture 61 comme par exemple à base de tôles.

Chaque abattant 6 est relié à une partie mobile 51 respective de façon à pouvoir pivoter entre une position relevée (abattant de gauche sur la Figure 1), dans laquelle il s'étend sensiblement verticalement, et une position abaissée, dans laquelle il s'étend horizontalement ou est légèrement incliné vers l'intérieur du tricycle à moteur 1 (abattant de droite sur la Figure 1). On peut souligner ici que dans ce mode de réalisation chaque abattant 6 constitue la porte latérale du véhicule 1 dans la position relevée.

Dans le mode de réalisation représenté, cette liaison entre l'abattant 6 et la partie mobile 51 est assurée au niveau de chaque région du longeron extérieur 510b qui se situe au voisinage de la fin de l'espace 23. Une patte de fixation 511 et une pièce de fixation 512 en U, servant à la fixation de la tige 81, sont portées par le longeron extérieur 510b, sur le dessus de ce dernier, et une extrémité d'une barre 60 s'étend entre celles-ci. Chacune de la patte de fixation 511, de la pièce de fixation 512 et de l'extrémité de la barre 60 présente un trou traversant, les trous étant alignés et un pivot 513 s'étendant de manière fixe à travers ceux-ci. Les trous des extrémités des deux barres 60 sont dimensionnés pour autoriser un mouvement de pivotement des barres 60, et donc de l'abattant 6, autour de l'axe de pivotement que forment les deux pivots 513. De plus, lesdites extrémités des barres 60 présentent chacune un décrochement en équerre 601 de forme complémentaire à celle du longeron extérieur 510b, en particulier en formant une face de butée 602. Deux butées 603 sont fixées sur la face verticale extérieure du longeron extérieur 510b.

Les différents éléments ci-dessus sont dimensionnés et agencés pour qu'en position abaissée, chaque face de butée 602 soit en butée contre la butée 603 respective et chaque barre 60 soit également en appui sur la face supérieure du longeron extérieur 510b, de façon à arrêter de manière sûre le pivotement de l'abattant 6 vers le bas, dans la position abaissée.

Les abattants 6 sont maintenus en position relevée par des moyens de blocage par poussée 64, que l'on peut mieux voir sur la Figure 7. Chaque tube 82 porte un ergot 640 s'étendant en direction de l'abattant 6 et ce dernier présente, sur chacun de ses deux bords latéraux, qui sont verticaux dans la position relevée, un trou 641 dans lequel l'extrémité de l'ergot 640 vient se placer, immobilisant ainsi l'abattant 6. Il suffit de pousser sur l'abattant 6 pour désengager l'ergot 640 du trou 641 ou l'engager dans le trou 641.

Les abattants 6 peuvent être relevés de la position abaissée à la position relevée à l'aide de moyens manuels 9 formés ici par une main-courante 90 montée sur le tube 82 côté arrière d'une manière pivotante autour de l'axe du tube 82, et par un moyen de liaison inextensible entre la main-courante 90 et un bord de l'abattant 6, par exemple un bord latéral ou extérieur, comme par exemple par une sangle ou une courroie (non représentée).

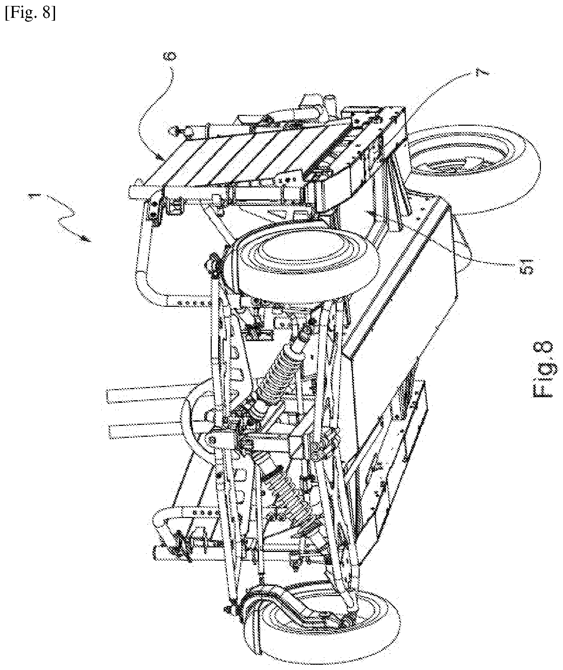

On va maintenant décrire la manière dont le conducteur peut monter ou descendre du véhicule 1 avec référence à la Figure 1 et aux Figures 8 à 10.

Dans la configuration de conduite du véhicule 1 (Figure 8), les parties mobiles 51 sont en position haute, les abattants 6 sont en position relevée, les béquilles 70 sont en position repliée et les moyens de sécurité 52 sont dans la position de verrouillage. Le conducteur, et éventuellement un ou deux passagers derrière lui, se situe sur la plateforme 5 composée de la partie fixe 50 et des deux parties mobiles 51 qui sont dans un même plan. Les abattants 6 constituent les portes qui ferment latéralement l'habitacle.

Après arrêt du véhicule 1, le conducteur souhaitant descendre sur un côté fera passer l'abattant 6 adéquat de la position relevée à la position abaissée, la partie mobile 51 respective restant en position haute. Cela est fait simplement en désengageant les moyens de blocage par poussée 64, l'abattant 6 pivotant vers le bas du fait de son poids et le conducteur contrôlant l'ouverture de l'abattant 6 en accompagnant le pivotement de la main-courante 90 provoqué par celui de l'abattant 6.

Le conducteur commande ensuite le dépliement de la béquille 70, par commande du moyen moteur 716, jusqu'à ce que la platine 702 vienne en contact avec le sol, et seulement alors il désengage les moyens de sécurité 52 en tirant sur les poignées 520 puis en les faisant tourner. La béquille 70 permet de stabiliser la partie mobile 51/abattant 6.

On souligne ici que le dépliement peut être poursuivi même après contact avec le sol, en vue de corriger l'assiette du véhicule 1 dans le cas où par exemple la route est inclinée. La poursuite du dépliement de la béquille 70 conduira la partie avant ou la partie arrière du véhicule 1 à s'élever de manière correspondante jusqu'à ce que son assiette soit horizontale, ce mouvement étant autorisé par les amortisseurs du véhicule 1.

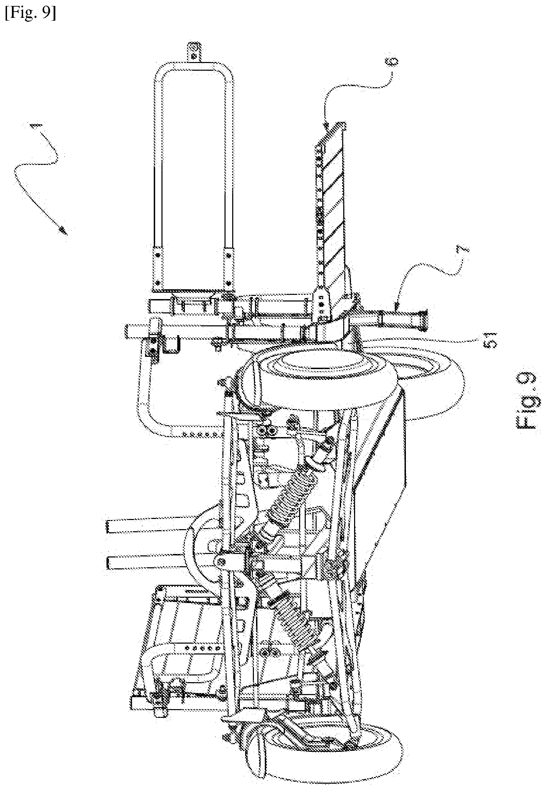

La Figure 9 montre le tricycle à moteur 1 dans la configuration abattant 6 en position abaissée, partie mobile 51 en position haute et béquille 70 en position dépliée.

Le conducteur peut ensuite se placer sur la sous-plateforme mobile que forment l'abattant 6 et la partie mobile 51. Le fait que l'abattant 6 soit horizontal ou légèrement incliné vers le haut permet, dans le cas où le conducteur est en fauteuil roulant, d'éviter que le fauteuil ne roule involontairement vers l'extérieur.

Le conducteur commande ensuite le moteur 716 pour replier la béquille 70, et du fait que les moyens de sécurité 52 ont été désengagés, la sous-plateforme mobile va descendre verticalement, tout en restant horizontale.

Cette descente est arrêtée par le conducteur, simplement par arrêt de la commande du moteur 716, à la hauteur souhaitée, par exemple à la hauteur d'un trottoir sur lequel le bord extérieur de l'abattant 6 sera venu en appui. Il suffit alors au conducteur de descendre de la sous-plateforme mobile.

La sous-plateforme mobile peut être abaissée jusqu'au repliement total de la béquille 70 dans le longeron extérieur 510b, comme représenté sur la Figure 10. Il est ainsi possible d'abaisser la sous-plateforme mobile jusqu'à la chaussée, dans le cas où l'on ne descend pas sur un trottoir.

Une fois que le conducteur a quitté la sous-plateforme mobile, il fait tourner les poignées 520 pour doigts de verrouillage, et peut commander le moteur 716 pour déplier la béquille 70, ce qui fera monter la sous-plateforme mobile, jusqu'à ce que la partie mobile 51 soit en position haute et verrouillée par les moyens de sécurité 52. La béquille 70 peut être alors repliée dans le longeron extérieur 510b et le conducteur peut relever l'abattant 6 en poussant sur la main-courante 90 après s'être placé sur le côté, puis en appuyant sur l'abattant 6 pour engager les moyens de blocage par poussée 64.

On comprendra aisément que lorsque le conducteur souhaite remonter dans le véhicule 1, après s'être placé sur le côté de l'endroit où la sous-plateforme mobile viendra se placer au sol, il lui suffit tout d'abord de débloquer l'abattant 6 en le désengageant des moyens de blocage par poussée 64, puis de contrôler son ouverture avec la main-courante 90, puis de commander le dépliement de la béquille 70 jusqu'au sol, puis de désengager les moyens de sécurité 52, puis de commander le repliement de la béquille 70 pour faire descendre la sous-plateforme mobile jusqu'à la hauteur souhaitée, à laquelle le conducteur peut s'y engager. Une fois sur celle-ci, le conducteur fait tourner les poignées 520 pour qu'elles soient ramenées par ressort dans la position de verrouillage, le conducteur commande ensuite le dépliement de la béquille 70 pour faire monter la sous-plateforme mobile jusqu'à la position haute, la partie mobile 51 étant alors automatiquement verrouillée à son arrivée en position haute par les moyens de sécurité 52, puis le conducteur replie la béquille 70 dans le longeron extérieur 510b et, après qu'il se soit placé dans le poste de conduite, le conducteur relève l'abattant 6 et l'engage dans les moyens de blocage par poussée 64. Le véhicule 1 est alors de nouveau dans la configuration de conduite.

Il est bien entendu que le mode de réalisation particulier qui vient d'être décrit a été donné à titre indicatif et non limitatif, et que des modifications peuvent être apportées sans que l'on s'écarte pour autant de la présente invention.

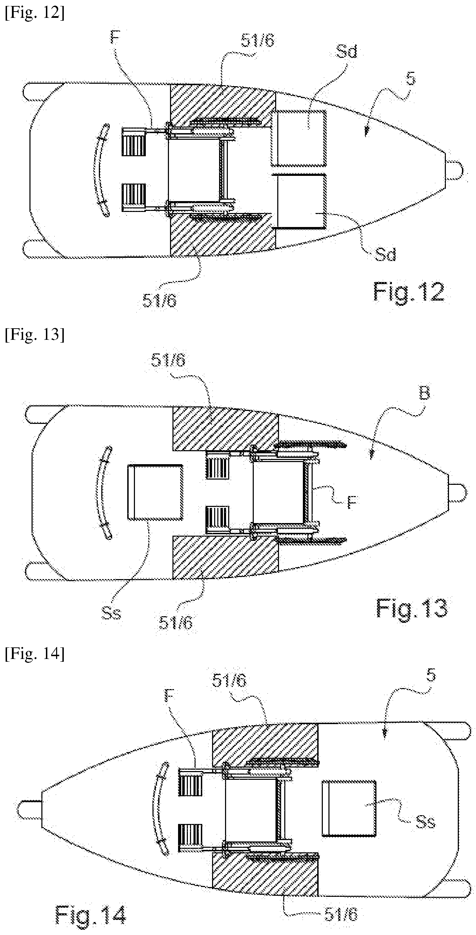

Par exemple, on pourra tout à fait prévoir, derrière le poste de conduite, un siège simple Ss ou un siège double Sd comme illustré schématiquement sur les Figures respectivement 11 et 12. Ce siège, qu'il soit simple ou double, sera avantageusement rabattable de façon à permettre à un fauteuil roulant F de prendre place à l'arrière, comme illustré sur la Figure 13, sur laquelle on peut voir qu'il est possible de prévoir un siège Ss à l'avant, qui sera avantageusement démontable, car relié à la plateforme par exemple par des moyens de fixation rapide, ou repliable.

Il est également possible de prévoir ces mêmes configurations sur un tricycle ayant une seule roue avant directrice et deux roues arrière, comme illustré sur les Figures 14 à 16.

On pourrait aussi prévoir une plateforme permettant à deux fauteuils roulants de prendre place l'un derrière l'autre, l'un dans le poste de conduite et l'autre à l'arrière.

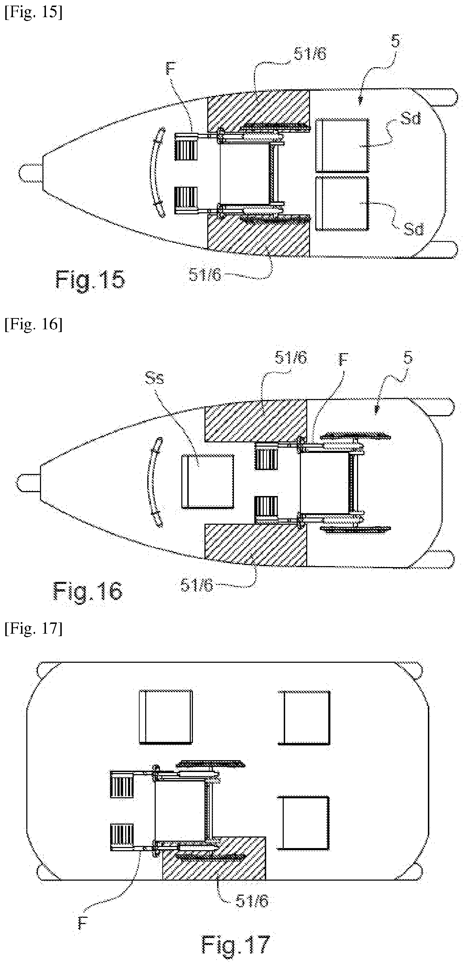

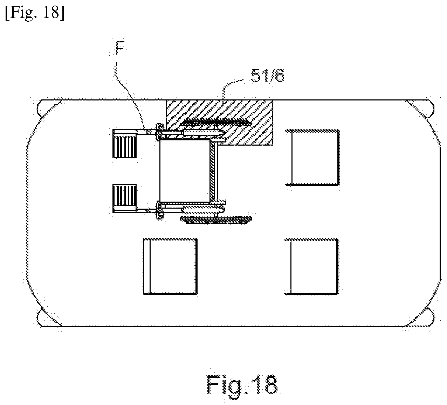

De plus, comme indiqué précédemment, le principe d'une partie mobile et d'un abattant selon la présente invention n'est pas limité à une application à un tricycle à moteur, mais tout à fait être appliqué à des véhicules à quatre roues, comme illustré sur les Figures 17 et 18, ou plus, comme par exemple à six roues avec quatre roues arrière. Dans le cas d'un véhicule à au moins quatre roues, on souligne que la partie mobile peut être positionnée pour faire partie, en position haute, du poste de conduite, comme illustré sur la Figure 17, ou être située côté passager comme illustré sur la Figure 18. Il est bien entendu également possible de prévoir plus d'une partie mobile, comme par exemple deux parties mobiles, une de chaque côté, et la ou les parties mobiles pourraient tout aussi bien être placée à l'avant ou à l'arrière du véhicule.

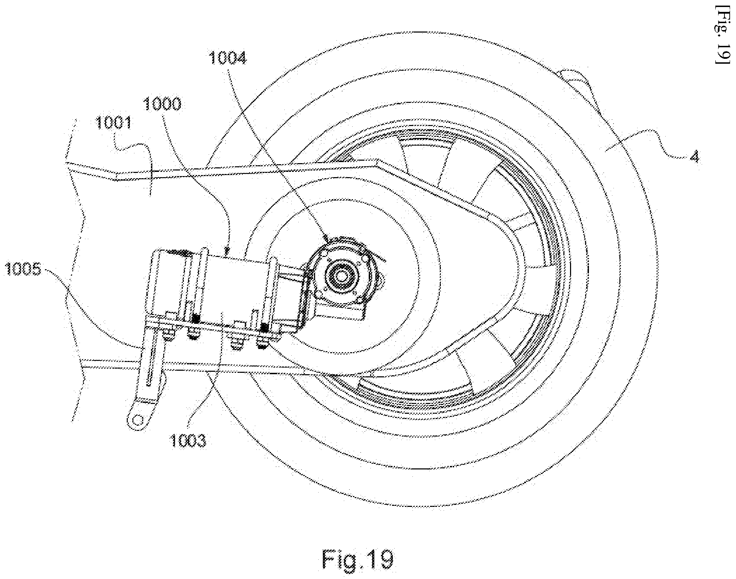

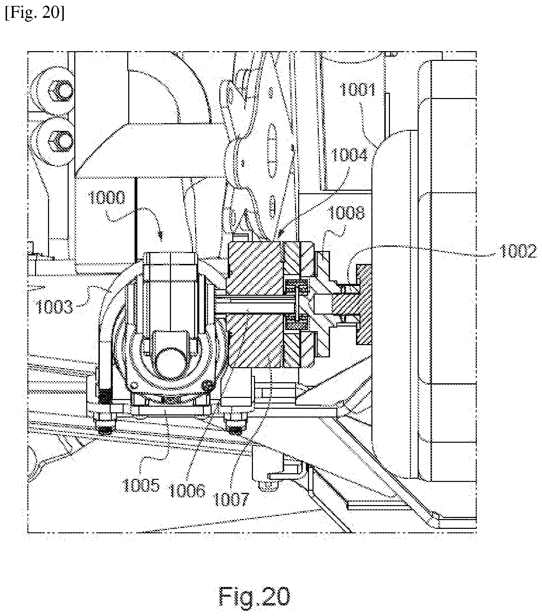

On a décrit ci-dessus les caractéristiques du véhicule 1 qui permettent d'assurer la montée et la descente d'une personne à mobilité réduite. Le véhicule 1 est également équipé d'un système de marche arrière 1000 représenté sur les Figures 19 et 20.

Dans le mode de réalisation représenté, la roue arrière 4 est une roue motrice dont la rotation est assurée par un système de marche avant analogue à celui rencontré sur les véhicules à deux roues de type scooter, dans lesquels la puissance fournie par un moyen moteur en marche avant, disposé en avant de la marche arrière, est transmise, par une courroie, à une transmission, par exemple composée d'une transmission primaire et d'une transmission secondaire, qui est en prise avec l'arbre de roue de la roue arrière 4 de façon à l'entraîner en rotation dans le sens de la marche avant. La courroie et la transmission sont traditionnellement protégées par un carter 1001 que l'on peut voir sur les Figures 19 et 20.

La présente invention n'étant pas limitée à un système de marche avant particulier, et ces systèmes étant bien connus en soi, ils ne seront pas décrits plus en détail. On peut toutefois souligner que, dans le mode de réalisation illustré, la transmission comprend une transmission primaire et une transmission secondaire, et l'arbre de transmission 1002 (Figure 20) de la transmission primaire se prolonge vers l'extérieur sur une distance telle que sa région d'extrémité fait saillie hors du carter 1001.

Le système de marche arrière 1000 comprend un moteur 1003 et un embrayage 1004 interposé entre le moteur 1003 et l'arbre de transmission 1002.

Le moteur 1003 est un moteur électrique porté par un support 1005 qui est lui-même fixé au carter 1001. En particulier, le moteur 1003 est un moteur à renvoi d'angle, bien connu en soi, ce qui permet de l'orienter de telle sorte que sa direction longitudinale est parallèle à celle du véhicule 1, et donc d'obtenir un agencement plus compact du système de marche arrière 1000.

L'arbre de sortie 1006, ou arbre moteur, du moteur 1003 est donc parallèle à l'arbre de roue de la roue arrière 4, comme on peut le voir sur la Figure 20.

L'embrayage 1004 est ici un embrayage électromagnétique à denture dont une première partie 1007 est rendue solidaire en rotation de l'arbre de sortie 1006 par tout moyen approprié, comme par exemple par clavette, et dont une seconde partie 1008 est rendue solidaire en rotation de la région d'extrémité de l'arbre de transmission 1001 par tout moyen approprié, par exemple par clavette. L'embrayage électromagnétique à denture et son principe de fonctionnement étant bien connus en soi, il n'est pas nécessaire de les décrire plus en détail.

Le moteur 1003 et l'embrayage 1004 sont ici tous les deux à commande électrique, qui pourra être déportée au niveau du poste de conduite du véhicule 1, en liaison avec la commande du système de marche avant. De préférence, on disposera un premier bouton, qui commande la mise sous tension/hors tension du moteur 1003, et un second bouton qui commande l'engagement/désembrayage de l'embrayage 1004 et la mise en rotation/arrêt de l'arbre de sortie 1006 du moteur 1003.

En marche avant, l'embrayage 1004 est automatiquement placé dans la position débrayée, de telle sorte que la rotation de l'arbre de transmission 1002 n'est pas transmise à l'arbre de sortie 1006 du moteur 1003.

Lorsque le conducteur souhaite passer en marche arrière, il doit tout d'abord appuyer sur le premier bouton, pour mettre en marche le moteur 1003. S'il appuie ensuite sur le second bouton, l'embrayage 1004 est amené à la position embrayée et l'arbre de sortie 1006 est amené à tourner, cette rotation étant transmise à l'arbre de transmission 1002 par l'embrayage 1004, et de là à l'arbre de roue de la roue arrière 4. Lorsque le conducteur relâche l'appui sur le second bouton, l'arbre de sortie 1006 arrête de tourner et l'embrayage 1004 est débrayé. Ainsi, le conducteur commande le déplacement du véhicule en marche arrière par l'appui sur le second bouton, et il contrôle la vitesse en appuyant plus ou moins longtemps sur le second bouton (commande par impulsions).

On souligne ici que pendant une marche arrière, la motorisation de marche avant reste disponible au conducteur : les commandes d'accélération et de freinage de la motorisation de marche avant peuvent être utilisées à tout moment, l'embrayage 1004 étant débrayé dès le relâchement du second bouton. Cela est particulièrement important car le conducteur doit être en mesure de déplacer sans délai le véhicule et, par exemple, ne pas gêner la circulation.

On constate donc que le conducteur du véhicule 1 pourra bien effectuer toutes les manoeuvres habituelles qu'un véhicule doit pouvoir effectuer, comme par exemple une manoeuvre de créneau.

## Revendications

1. Véhicule (1) à moteur, comprenant :
- un châssis (2),
- un ensemble roue avant directrice (3) et un ensemble roue arrière (4),
- une plateforme (5) pour accueillir au moins le conducteur du véhicule (1), au moins une partie de la plateforme (5) étant solidaire du châssis (2), et
- au moins un abattant (6) latéral situé sur un côté de la plateforme (5) et relié à celle-ci de façon à être apte à pivoter entre une position dite relevée, dans laquelle l'abattant (6) a été relevé et est globalement vertical, et une position dite abaissée, dans laquelle l'abattant (6) a été pivoté vers le bas pour former un moyen d'accès par lequel une personne peut monter sur la plateforme (5) et descendre de celle-ci,
dans lequel la plateforme (5) comprend une partie fixe (50) solidaire du châssis (2) et au moins une partie mobile (51) latérale située au niveau d'un côté de la plateforme (5), la partie mobile (51) étant déplaçable verticalement par rapport à la partie fixe (50) de façon à être apte à être placée à une première position, dite position haute, dans laquelle elle est à fleur avec la partie fixe (50), et une deuxième position, dite position basse, dans laquelle elle se situe à une hauteur inférieure à celle de la partie fixe (50), étant prévus à cet effet des moyens (7) de commande du déplacement vertical de l'au moins une partie mobile (51), le véhicule (1) étant **caractérisé par le fait que** le ou chaque abattant (6) est relié à la partie mobile (51) respective de telle sorte que l'abattant (6) et la partie mobile (51) respective sont déplaçables verticalement d'un seul tenant entre les positions haute et basse alors que l'abattant (6) est en position abaissée.

2. Véhicule (1) selon la revendication 1, **caractérisé par le fait qu'**il comprend en outre des moyens de stabilisation (70) pour stabiliser le véhicule (1) lors du déplacement de l'au moins une partie mobile (51) entre les positions haute et basse.

3. Véhicule (1) selon l'une quelconque des revendications 1 et 2, **caractérisé par le fait que** l'au moins une partie mobile (51) fait partie, dans la position haute, de la région de la plateforme (5) où se situe le poste de conduite du véhicule (1).

4. Véhicule (1) selon l'une quelconque des revendications 1 à 3, **caractérisé par le fait que** le véhicule est un tricycle, notamment un tricycle dont l'ensemble roue avant directrice comprend une unique roue avant et l'ensemble roue arrière comprend deux roues arrière ou un tricycle dont l'ensemble roue avant directrice comprend deux roues avant et l'ensemble roue arrière comprend une unique roue arrière ou deux roues arrière jumelées.

5. Véhicule (1) selon l'une quelconque des revendications 1 à 4, **caractérisé par le fait qu'**il comprend deux desdits abattants (6), situés de part et d'autre de la plateforme (5), et deux desdites parties mobiles (51), de préférence chaque abattant (6) constituant, en position relevée, une porte latérale (6) du véhicule (1).

6. Véhicule (1) selon l'une quelconque des revendications 1 à 5, **caractérisé par le fait que** le ou chaque abattant (6) est relié librement pivotant à la partie mobile (51) respective de la plateforme (5), étant en outre prévus, pour le ou chaque abattant (6), des moyens manuels de relevage de l'abattant (6) de la position abaissée à la position relevée, ainsi que des moyens de butée pour l'abattant (6) dans la position abaissée et des moyens de blocage de l'abattant (6) dans la position relevée.

7. Véhicule (1) selon l'une quelconque des revendications 1 à 6, **caractérisé par le fait que** le châssis (2) est configuré de telle sorte que l'au moins une partie mobile (51) est, dans la position haute, inscrite dans le châssis (2) et protégée par celui-ci.

8. Véhicule (1) selon la revendication 7, prise en dépendance de la revendication 4 ou de l'une des revendications 5 à 7 elles-mêmes prises en dépendance de la revendication 4, le véhicule (1) étant ainsi un tricycle, **caractérisé par le fait que** le châssis (2) comprend une partie centrale (20) et, de chaque côté de cette dernière, une extension latérale avant (21) et une extension latérale arrière (22), le châssis (2) ayant ainsi une forme de H, un espace (23) étant formé entre les extensions latérales avant (21) et arrière (22) situées d'un même côté de la partie centrale (20), espace (23) dans lequel se place une partie mobile (51) respective de la plateforme (5) lorsqu'elle est en position haute.

9. Véhicule (1) selon l'une quelconque des revendications 1 à 8, **caractérisé par le fait que** les moyens de commande du déplacement vertical de l'au moins une partie mobile (51) sont aptes à assurer un déplacement vertical continu de l'au moins une partie mobile (51) et à arrêter ce déplacement vertical à une quelconque hauteur inférieure à celle de la partie mobile (51) dans la position haute.

10. Véhicule (1) selon l'une quelconque des revendications 1 à 9, **caractérisé par le fait que** les moyens (7) de commande du déplacement vertical de l'au moins une partie mobile (51) comprennent, pour la ou chaque partie mobile (51), au moins un actionneur non manuel.

11. Véhicule (1) selon la revendication 10 prise en dépendance de la revendication 2, **caractérisé par le fait que** les moyens (7) de commande du déplacement vertical de l'au moins une partie mobile (51) comprennent, pour la ou chaque partie mobile (51) :
- un actionneur formé par une béquille (70) repliable sous ladite partie mobile (51) et dépliable vers le bas à partir de celle-ci, la béquille (70) étant motorisée par des moyens de motorisation (71), la béquille (70) constituant lesdits moyens de stabilisation (70) ; et
- des moyens (8) de guidage en translation de ladite partie mobile (51) par rapport au châssis (2).

12. Véhicule (1) selon la revendication 11, **caractérisé par le fait que** la béquille (70) comprend un bras principal (700) et un bras secondaire (701), le bras principal (700) ayant une première extrémité articulée à une pièce (710) déplaçable en translation et située à l'intérieur d'un longeron (510b) creux appartenant à la partie mobile (51), et une seconde extrémité apte à venir en appui sur le sol après dépliement de la béquille (70), le bras secondaire (701) étant repliable à l'intérieur du bras principal (700) et ayant une première extrémité articulée à ce dernier et une seconde extrémité articulée à un palier (711) fixe dans ledit longeron (510), et **par le fait que** les moyens de motorisation (71) comprennent ladite pièce (710) et des moyens (712) d'entraînement en translation de ladite pièce (710) dans les deux directions de translation.

13. Véhicule (1) selon la revendication 12, **caractérisé par le fait que** la pièce (710) est une douille (710) et les moyens (712) d'entraînement en translation de ladite pièce (710) comprennent un arbre (712) enfilé à travers ladite douille (710) et qui s'étend le long de l'intérieur dudit longeron (510b), et des moyens d'entraînement en rotation de l'arbre (712) aptes à faire tourner l'arbre (712) dans les deux sens de rotation, la douille (710) et l'arbre (712) étant reliés par une liaison hélicoïdale de telle sorte qu'une rotation de l'arbre (712) amène une translation de la douille (710).

14. Véhicule (1) selon l'une quelconque des revendications 1 à 13, **caractérisé par le fait qu'**il comprend un système de marche arrière (1000) apte à entraîner en rotation de marche arrière un arbre de roue de l'ensemble roue arrière (4), le système de marche arrière (1000) comprenant :
- un moyen moteur dédié (1003), comprenant un arbre moteur (1006) destiné, en utilisation, à tourner dans un sens de rotation conduisant à un déplacement du véhicule en marche arrière, le moyen moteur dédié (1003) étant, de préférence, un moteur électrique à renvoi d'angle ;
- un moyen d'accouplement sélectif (1004) commandable de façon à accoupler ou désaccoupler l'arbre moteur (1006) et l'arbre de roue, le moyen d'accouplement sélectif (1004) étant, de préférence, un embrayage, dit de marche arrière, dont une première partie (1007) est solidaire en rotation de l'arbre moteur (1006) et dont une seconde partie (1008) est solidaire en rotation de l'arbre de roue, l'embrayage étant notamment un embrayage électromagnétique, par exemple à denture ; et
- des moyens de commande du moyen d'accouplement sélectif (1004).

15. Véhicule (1) selon la revendication 14, **caractérisé par le fait qu'**il comprend un système de marche avant qui comprend un moyen moteur pour la marche avant, disposé en avant de l'ensemble roue arrière (4) et ayant un arbre moteur relié par courroie à une transmission qui comprend un arbre de transmission (1002) entraîné en rotation par la courroie et entraînant en rotation de marche avant l'arbre de roue, l'arbre de transmission (1002) se prolongeant vers l'extérieur de telle sorte qu'une région d'extrémité de celui-ci se situe au-delà de ladite courroie, le moyen d'accouplement sélectif (1004), le cas échéant la seconde partie (1008) de l'embrayage de marche arrière, étant relié à ladite région d'extrémité de l'arbre de transmission (1002).

## Patentansprüche

1. - Kraftfahrzeug (1), umfassend:
- einen Rahmen (2),
- eine lenkbare Vorderradeinheit (3), und eine Hinterradeinheit (4),
- eine Plattform (5), um mindestens den Fahrer des Fahrzeugs (1) aufzunehmen, wobei mindestens ein Teil der Plattform (5) fest mit dem Rahmen (2) verbunden ist, und
- mindestens eine seitliche Klappe (6), die sich auf einer Seite der Plattform (5) befindet und mit dieser derart verbunden ist, dass sie dazu in der Lage ist, zwischen einer Position, bezeichnet als erhöhte Position, in der die Klappe (6) erhöht wurde und im Wesentlichen vertikal ist, und einer Position, bezeichnet als abgesenkte Position, in der die Klappe (6) nach unten geschwenkt wurde, zu schwenken, um ein Zugangsmittel zu bilden, mit Hilfe dessen eine Person auf die Plattform (5) steigen und von dieser absteigen kann,
wobei die Plattform (5) einen festen Teil (50) umfasst, der fest mit dem Rahmen (2) verbunden ist, und mindestens einen beweglichen seitlichen Teil (51), der sich auf der Ebene einer Seite der Plattform (5) befindet, wobei der bewegliche Teil (51) vertikal mit Bezug auf den festen Teil (50) verschoben werden kann, um dazu in der Lage zu sein, in eine erste Position, bezeichnet als obere Position, in der er mit dem festen Teil (50) bündig ist, und eine zweite Position, bezeichnet als untere Position, platziert zu werden, in der er sich auf einer geringeren Höhe als derjenigen des festen Teils (50) befindet, wobei zu diesem Zweck Mittel (7) zur Steuerung der vertikalen Verschiebung des mindestens einen beweglichen Teils (51) vorgesehen sind, wobei das Fahrzeug (1) **dadurch gekennzeichnet ist, dass** die oder jede Klappe (6) mit dem jeweiligen beweglichen Teil (51) derart verbunden ist, dass die Klappe (6) und der jeweilige bewegliche Teil (51) vertikal in einem Stück zwischen der oberen und der unteren Position verschoben werden kann, während sich die Klappe (6) in der abgesenkten Position befindet.

2. - Fahrzeug (1) nach Anspruch 1, **dadurch gekennzeichnet, dass** es außerdem Stabilisierungsmittel (70) umfasst, um das Fahrzeug (1) bei der Verschiebung des mindestens einen beweglichen Teils (51) zwischen der oberen und der unteren Position zu stabilisieren.

3. - Fahrzeug (1) nach einem der Ansprüche 1 und 2, **dadurch gekennzeichnet, dass** der mindestens eine bewegliche Teil (51) in der oberen Position zur Region der Plattform (5) gehört, wo sich der Fahrerstand des Fahrzeugs (1) befindet.

4. - Fahrzeug (1) nach einem der Ansprüche 1 bis 3, **dadurch gekennzeichnet, dass** das Fahrzeug ein Dreirad ist, insbesondere ein Dreirad, dessen lenkbare Vorderradeinheit ein einziges Vorderrad umfasst, und die Hinterradeinheit zwei Hinterräder umfasst, oder ein Dreirad, dessen lenkbare Vorderradeinheit zwei Vorderräder umfasst und die Hinterradeinheit ein einziges Hinterrad oder zwei verbundene Hinterräder umfasst.

5. - Fahrzeug (1) nach einem der Ansprüche 1 bis 4, **dadurch gekennzeichnet, dass** es zwei Klappen (6) umfasst, die sich auf beiden Seiten der Plattform (5) befinden, und zwei bewegliche Teile (51), wobei vorzugsweise jede Klappe (6) in der erhöhten Position einen seitliche Tür (6) des Fahrzeugs (1) darstellt.

6. - Fahrzeug (1) nach einem der Ansprüche 1 bis 5, **dadurch gekennzeichnet, dass** die oder jede Klappe (6) frei schwenkend mit dem jeweiligen beweglichen Teil (51) der Plattform (5) verbunden ist, wobei außerdem für die oder jede Klappe (6) manuelle Mittel zur Erhöhung der Klappe (6) aus der abgesenkten Position in die erhöhte Position sowie Anschlagmittel für die Klappe (6) in der abgesenkten Position und Blockiermittel der Klappe (6) in der angehobenen Position vorgesehen sind.

7. - Fahrzeug (1) nach einem der Ansprüche 1 bis 6, **dadurch gekennzeichnet, dass** der Rahmen (2) derart konfiguriert ist, dass der mindestens eine bewegliche Teil (51) in der oberen Position in den Rahmen (2) eingeschrieben und von diesem geschützt ist.

8. - Fahrzeug (1) nach Anspruch 7 in Abhängigkeit von Anspruch 4, oder einem der Ansprüche 5 bis 7 selbst in Abhängigkeit von Anspruch 4, wobei das Fahrzeug (1) somit ein Dreirad ist, **dadurch gekennzeichnet, dass** der Rahmen (2) einen zentralen Teil (20) und auf jeder Seite diese Letzteren eine vordere seitliche Erweiterung (21) und eine hintere seitliche Erweiterung (22) umfasst, wobei der Rahmen (2) somit H-förmig ist, wobei ein Raum (23) zwischen den vorderen (21) und hinteren seitlichen Erweiterungen (22) gebildet ist, die sich auf einer gleichen Seite des zentralen Teils (20) befinden, ein Raum (23), in dem ein entsprechender beweglicher Teil (51) der Plattform (5) platziert ist, wenn er sich in der oberen Position befindet.

9. - Fahrzeug (1) nach einem der Ansprüche 1 bis 8, **dadurch gekennzeichnet, dass** die Mittel zur Steuerung der vertikalen Verschiebung des mindestens einen beweglichen Teils (51) ausgelegt sind um eine kontinuierliche vertikale Verschiebung des mindestens einen mobilen Teils (51) sicherzustellen und diese vertikale Verschiebung auf einer beliebigen Höhe unter derjenigen des beweglichen Teils (51) in der oberen Position anzuhalten.

10. - Fahrzeug (1) nach einem der Ansprüche 1 bis 9, **dadurch gekennzeichnet, dass** die Mittel (7) zur Steuerung der vertikalen Verschiebung des mindestens einen beweglichen Teils (51) bei dem oder jedem beweglichen Teil (51) mindestens eine nicht manuelle Betätigungsvorrichtung umfassen.

11. - Fahrzeug (1) nach Anspruch 10 in Abhängigkeit von Anspruch 2, **dadurch gekennzeichnet, dass** die Mittel (7) zur Steuerung der vertikalen Verschiebung des mindestens einen beweglichen Teils (51) bei dem oder jedem beweglichen Teil (51) Folgendes umfassen:
- eine Betätigungsvorrichtung, die von einer Stütze (70), die unter dem beweglichen Teil (51) einklappbar und ausgehend von diesem nach unten ausklappbar ist, gebildet wird, wobei die Stütze (70) durch Motorisierungsmittel (71) motorisiert ist, wobei die Stütze (70) die Stabilisierungsmittel (70) darstellt; und
- Mittel (8) zur translatorischen Führung des beweglichen Teils (51) mit Bezug auf den Rahmen (2).

12. - Fahrzeug (1) nach Anspruch 11, **dadurch gekennzeichnet, dass** die Stütze (70) einen Hauptarm (700) und einen sekundären Arm (701) umfasst, wobei der Hauptarm (700) ein erstes Ende, das an ein Stück (710) gelenkig verbunden ist, das translatorisch verschiebbar ist und sich im Inneren eines hohlen Längsträgers (510b) befindet, der zum beweglichen Teil (51) gehört, und ein zweites Ende aufweist, das ausgelegt ist, um nach dem Ausklappen der Stütze (70) auf dem Boden in Auflage zu kommen, wobei der sekundäre Arm (701) im Inneren des Hauptarms (700) eingeklappt werden kann und ein erstes Ende aufweist, das an diesem Letzteren gelenkig verbunden ist, und ein zweites Ende, das an ein festes Lager (711) in dem Längsträger (510) gelenkig verbunden ist, und dadurch, dass die Motorisierungsmittel (71) das Stück (710) und Mittel (712) zum translatorischen Antrieb des Stücks (710) in die zwei Translationsrichtungen umfasst.

13. - Fahrzeug (1) nach Anspruch 12, **dadurch gekennzeichnet, dass** das Stück (710) eine Hülse (710) ist und die Mittel (712) zum translatorischen Antrieb des Stücks (712) eine Welle (712), die durch die Hülse (710) eingeführt ist, und die sich entlang des Inneren des Längsträgers (510b) erstreckt, und Mittel zur Versetzung der Welle (712) in Rotation umfassen, die ausgelegt sind, um die Welle (712) in die zwei Rotationsrichtungen zu drehen, wobei die Hülse (710) und die Welle (712) durch eine schraubenförmige Verbindung derart verbunden sind, dass eine Rotation der Welle (712) eine Translation der Hülse (710) mit sich bringt.

14. - Fahrzeug (1) nach einem der Ansprüche 1 bis 13, **dadurch gekennzeichnet, dass** es ein Rückwärtsgangsystem (1000) umfasst, das ausgelegt ist, um eine Radwelle der Hinterradeinheit (4) in Rückwärtsgangrotation zu versetzen, wobei das Rückwärtsgangsystem (1000) Folgendes umfasst:
- ein zugewiesenes Motormittel (1003), umfassend eine Motorwelle (1006), die im Gebrauch dazu vorgesehen ist, sich in einer Rotationsrichtung zu drehen, die zu einer Verschiebung des Fahrzeugs im Rückwärtsgang führt, wobei das zugewiesene Motormittel (1003) vorzugsweise eine elektrischer Motor mit Winkeltrieb ist;
- ein Mittel zur selektiven Kupplung (1004), die so steuerbar ist, dass sie die Motorwelle (1006) und die Radwelle ein- oder auskuppelt, wobei das Kupplungsmittel (1004) vorzugsweise eine Kupplung, bezeichnet als Rückwärtsgangkupplung, ist, von der ein erster Teil (1007) in Rotation fest mit der Motorwelle (1006) verbunden ist, und von der ein zweiter Teil (1008) in Rotation fest mit der Radwelle verbunden ist, wobei die Kupplung insbesondere eine elektromagnetische Kupplung, z. B. eine Zahnkupplung ist; und
- Mittel zur Steuerung des Mittels zur selektiven Kupplung (1004).

15. - Fahrzeug (1) nach Anspruch 14, **dadurch gekennzeichnet, dass** es ein Vorwärtsfahrsystem umfasst, das ein Motormittel für die Vorwärtsfahrt umfasst, das vor der Hinterradeinheit (4) angeordnet ist und eine Motorwelle aufweist, die über einen Riemen mit einem Getriebe verbunden ist, das eine Übertragungswelle (1002) umfasst, die durch den Riemen in Drehung versetzt wird und die Radwelle in Vorwärtsfahrtdrehung antreibt, wobei die Übertragungswelle (1002) nach außen verlängert ist, so dass ein Endregion davon jenseits des Riemens liegt, wobei das Mittel zur selektiven Kupplung (1004), gegebenenfalls der zweite Teil (1008) der Rückwärtsgangkupplung, mit dem Endregion der Übertragungswelle (1002) verbunden ist.

## Claims

1. - A motor vehicle (1), comprising:
- a chassis frame (2),
- a steerable front wheel assembly (3) and a rear wheel assembly (4),
- a platform (5) for accommodating at least the driver of the vehicle (1), at least a portion of the platform (5) being secured to the chassis frame (2), and
- at least one lateral folding side (6) located on one side of the platform (5) and connected thereto so as to be able to pivot between a so-called raised position, in which the folding side (6) has been raised and is generally vertical, and a so-called lowered position, in which the folding side (6) has been pivoted downwards to form a means of access by which a person can get onto the platform (5) and get off the same,
wherein the platform (5) comprises a stationary portion (50) secured to the chassis frame (2) and at least one lateral movable portion (51) located at one side of the platform (5), the movable portion (51) being vertically movable relative to the stationary portion (50) in such a way as to be able to be placed in a first position, called the high position, in which it is flush with the stationary portion (50), and a second position, called the low position, in which it is located at a lower height than that of the stationary portion (50), means (7) being provided for controlling the vertical movement of the at least one movable portion (51), the vehicle (1) being **characterised in that** the or each folding side (6) is connected to the respective movable portion (51) in such a way that the folding side (6) and the respective movable portion (51) are vertically movable in one piece between the high and low positions while the folding side (6) is in the lowered position.

2. - The vehicle (1) according to claim 1, **characterised in that** it further comprises stabilizing means (70) for stabilizing the vehicle (1) during movement of the at least one movable portion (51) between the high and low positions.

3. - The vehicle (1) according to any one of claims 1 and 2, **characterised in that** the at least one movable portion (51) forms part, in the high position, of the section of the platform (5) where the driving position of the vehicle (1) is located.

4. - The vehicle (1) according to any one of claims 1 to 3, **characterised in that** the vehicle is a tricycle, in particular a tricycle in which the steerable front wheel assembly comprises a single front wheel and the rear wheel assembly comprises two rear wheels or a tricycle in which the steerable front wheel assembly comprises two front wheels and the rear wheel assembly comprises a single rear wheel or two twin rear wheels.

5. - The vehicle (1) according to any one of claims 1 to 4, **characterised in that** it comprises two said folding sides (6), located on either side of the platform (5), and two said movable portions (51), preferably each folding side (6) constituting, in the raised position, a side door (6) of the vehicle (1).

6. - The vehicle (1) according to any one of claims 1 to 5, **characterised in that** the or each folding side (6) is connected in a freely pivotable manner to the respective movable portion (51) of the platform (5), there being further provided, for the or each folding side (6), manual raising means (8) for raising the folding side (6) from the lowered position to the raised position, as well as stopping means for stopping the folding side (6) in the lowered position and locking means for locking the folding side (6) in the raised position.

7. - The vehicle (1) according to any one of claims 1 to 6, **characterised in that** the chassis frame (2) is configured such that the at least one movable portion (51) is, in the high position, inscribed in and protected by the chassis frame (2).

8. - The vehicle (1) according to claim 7, taken in dependence on claim 4 or on one of claims 5 to 7 themselves taken in dependence on claim 4, the vehicle (1) thus being a tricycle, **characterised in that** the chassis frame (2) comprises a central portion (20) and, on each side thereof, a front lateral extension (21) and a rear lateral extension (22), the chassis frame (2) thus being H-shaped, a space (23) being formed between the front (21) and rear (22) lateral extensions located on the same side of the central portion (20), in which space (23) a respective movable portion (51) of the platform (5) is placed when in the high position.

9. - The vehicle (1) according to any one of claims 1 to 8, **characterised in that** the means for controlling the vertical movement of the at least one movable portion (51) are able to ensure a continuous vertical movement of the at least one movable portion (51) and to stop this vertical movement at any height lower than that of the movable portion (51) in the high position.

10. - The vehicle (1) according to any one of claims 1 to 9, **characterised in that** the means (7) for controlling the vertical movement of the at least one movable portion (51) comprise, for the or each movable portion (51), at least one non-manual actuator.

11. - The vehicle (1) according to claim 10 taken in dependence on claim 2, **characterised in that** the means (7) for controlling the vertical movement of the at least one movable portion (51) comprise, for the or each movable portion (51):
- an actuator formed by a stand (70) foldable under said movable portion (51) and able to be unfolded downwards from the latter, the stand (70) being motorized by motorization means (71), the stand (70) constituting said stabilizing means (70); and
- means (8) for guiding said movable portion (51) in translation with respect to the chassis frame (2).

12. - The vehicle (1) according to claim 11, **characterised in that** the stand (70) comprises a main arm (700) and a secondary arm (701), the main arm (700) having a first end articulated to a part (710) that can be moved in translation and is located inside a hollow longitudinal member (510b) belonging to the movable portion (51), and a second end capable of coming to bear on the ground after the stand (70) has been unfolded, the secondary arm (701) being foldable inside the main arm (700) and having a first end articulated to the latter and a second end articulated to a bearing (711) fixed inside said longitudinal member (510), and **in that** the motorization means (71) comprises said part (710) and means (712) for driving said part (710) in translation in the two directions of translation.

13. - The vehicle (1) according to claim 12, **characterised in that** the part (710) is a sleeve (710) and the means (712) for driving said part (710) in translation comprise a shaft (712) extending through said sleeve (710) and along the inside of said longitudinal member (510b) and means for rotating the shaft (712) that are able to rotate the shaft (712) in both directions of rotation, the sleeve (710) and the shaft (712) being connected by a helical connection such that a rotation of the shaft (712) causes a translation of the sleeve (710).

14. - The vehicle (1) according to any one of claims 1 to 13, **characterised in that** it comprises a reverse gear system (1000) able to drive in reverse rotation the wheel axle of the rear wheel assembly (4), the reverse gear system (1000) comprising:
- a dedicated motor means (1003), comprising a driving shaft (1006) intended, in use, to rotate in a direction of rotation leading to a reverse movement of the vehicle, the dedicated motor means (1003) preferably being an angle drive electric motor;
- a selective coupling means (1004) controllable so as to couple or uncouple the driving shaft (1006) and the wheel axle, the selective coupling means (1004) preferably being a so-called reverse clutch, a first part (1007) of which is fixed in rotation to the driving shaft (1006) and a second part (1008) of which is fixed in rotation to the wheel axle, the clutch being in particular an electromagnetic clutch, for example with teeth ; and
- means for controlling the selective coupling means (1004).

15. - The vehicle (1) according to claim 14, **characterised in that** it comprises a forward drive system which comprises a motor means for forward drive, located forward of the rear wheel assembly (4) and having a driving shaft connected by a belt to a drivetrain which comprises a drive shaft (1002) rotated by the belt and driving the wheel axle in forward drive rotation, the drive shaft (1002) extending outwardly so that an end section thereof lies beyond said belt, the selective coupling means (1004), if applicable the second part (1008) of the reverse clutch, being connected to said end section of the drive shaft (1002).
